# EUROPEAN PATENT SPECIFICATION

(11) **EP 2 749 297 B1**
(45) Date of publication and mention of the grant of the patent: **03.08.2016**
(21) Application number: 12817888.6
(22) Date of filing: 25.07.2012
(51) Int. Cl.: A23B 4/10, A23B 4/12, A23B 4/16

(54) **METHOD FOR PRESERVING BY-PRODUCTS FROM THE MEAT INDUSTRY AND OTHER FOOD INDUSTRIES**
VERFAHREN ZUR KONSERVIERUNG VON NEBENPRODUKTEN AUS DER FLEISCHWARENVERARBEITENDEN UND ANDEREN NAHRUNGSMITTELINDUSTRIEN
PROCÉDÉ DE CONSERVATION DES SOUS-PRODUITS DE L'INDUSTRIE DES PRODUITS CARNÉS ET D'AUTRES INDUSTRIES ALIMENTAIRES

(30) Priority: 26.07.2011 ES 201131274; 24.02.2012 ES 201230284
(43) Date of publication of application: 02.07.2014
(73) Proprietor: Higienizo Tecnicas Reunidas S.L.U., 28939 Madrid (ES)
(72) Inventor: BAEZA ORTEGA, Fernando, E-28939 Madrid (ES); EGEA FERNÁNDEZ, Antonio, E-28939 Madrid (ES); ROMERO LÓPEZ, Miguel Angel, E-28939 Madrid (ES); PUMARIÑO ÁLVAREZ, José Ramón, E-28939 Madrid (ES); BORGEAUD, Jaime, E-28939 Madrid (ES); GUZMÁN ARCOS, José Maria, E-28939 Madrid (ES)
(74) Representative: Del Valle Valiente, Sonia
(86) International application number: PCT/ES2012/070568
(87) International publication number: WO 2013/014320

(56) References cited:
- WO-A1-83/03522
- WO-A1-83/03522
- CA-A1- 2 392 329
- DE-A1- 2 713 201
- DE-C1- 4 420 127
- US-A- 3 475 179
- US-A1- 2003 118 705
- US-A1- 2009 226 579

## Description

### OBJECT OF THE INVENTION

The present invention relates to a novel procedure that has been specially designed for the preservation of by-products from industries such as the meat, fish, fish farming and horticulture industries. The invention is based on the application of different preservatives, and the object of the invention is to avoid or drastically reduce the putrefaction or degradation of such by-products, without them needing to be previously milled, ground, cut, dispersed or separated.

The invention falls within the field of meat and fish industries and vegetable processing, particularly meat, fish and vegetable by-products, which will subsequently be used in other industries, such as for example, for the manufacture of meat meal or fish meal, animal or vegetable oils or fats, or used to produce protein or vegetable concentrates, and may even be used directly in farms or for animal feed factories.

### BACKGROUND OF THE INVENTION

The application of preservatives has been used before or after to preserve food for human or animal use. Examples include anchovies in vinegar, tanning of hides or sausage among others.

As regards to animal feed, there are ample references on the use of organic and inorganic acids, salts, essential oils or plant extracts on raw materials (in feed factories on cereal or soya among others, or on silage for ruminants) or on the finished feed.

In the case of fish by-products, a fish silage technique is commonly used in fish slaughterhouses on by-products thereof or in hatcheries on the dead fish, which consists in physically milling the by-products and adding acid to preserve, even for months, the silage generated, resulting in a viscous-looking paste with a pH below 4.0.

In the case of by-products, we have found no published reference on the use of preservatives without the prior or subsequent existence of a physical treatment that attempts to grind, mill, cut, loosen or separate the by-products, and no reference to the same treatment applied to the by-products from the meat industry or fruit and vegetable industry, for silage by manufacturing a paste.

The by-products are generally stored as they are produced, without applying cold, such that putrefaction or degradation is accelerated, and this happens both during storage at origin and during transport.

In the case of silage, in order that the use of preservatives should be quickly effective, the prior milling of by-products is required, with the resulting negative economic impact this entails both from the standpoint of investment and practical implementation.

Typically, both storage and transport is carried out in containers in which there is a marked loss of leachates, such that if their loss is not prevented, it would also drag the preservatives (assuming they are added), with the resulting loss of effectiveness of the latter.

Obviously, the greater the degree of by-product degradation during storage and transportation, the lower the quality of the meal, oils, etc., which will eventually be obtained from it.

### DESCRIPTION OF THE INVENTION

The procedure proposed by the invention solves in a fully satisfactory manner the drawbacks set forth above.

To that end and more specifically, the procedure of the invention provides that the preservatives be applied or added to the container of the by-products every time the by-products are loaded, in the state in which they have been generated, i.e., without grinding, milling, etc.

Also, according to the procedure of the invention, it is foreseen that the application of such preservatives should be carried out in nebulised form, generating a mixture of preservative / pressurized air which ensures that the preservative reaches the by-products with an optimum and even distribution.

Obviously each time the by-products are loaded into the corresponding tank or container, controller means must properly dose the preservative, so the ratio between by-products / preservatives remains within the pre-established limits.

Finally, another characteristic of the invention is the fact that the placing of the by-products in the relevant storage container is performed from the same point, such that the by-products as a whole should adopt a general cone-like configuration, applying nebulised preservative on the surface of the by-product stored in the hopper, to further enhance the uniform distribution mentioned above.

The said containers, which in practice can be realized in non-refrigerated silos or tanks, shall be airtight in order to avoid loss of leachate and consequently the parallel loss or waste of preservatives.

An alternative of this procedure anticipates that the addition of preservatives is performed during the loading of the by-products into the collecting container, without carrying out such incorporation during each by-product loading.

It is also envisaged that the nebulisation phase can be eliminated in the application of preservatives, while it is possible to carry out this application by stream spraying or any other suitable system which is cheaper than nebulisation.

According to another variant, the application of preservatives on the by-product can be performed on the surface thereof or on each layer formed in its stacking within the relevant container or silo.

In order to economically improve the procedure, it can also be carried out without the airtight sealing of the silo or container of the by-products to which the preservative is applied.

Finally, the application of the preservative and appropriate dosage thereof can be performed either by a remote control system or manually, interchangeably, so that in the latter case the installation is considerably simplified and thus cost-saving.

### EXAMPLE OF A PRACTICAL EMBODIMENT OF THE INVENTION

The following may be used as preservatives: various combinations of organic acids (formic acid, propionic acid, acetic acid, lactic acid, butyric acid, lignosulfonic acid, capric acid, caproic acid, caprylic acid, humic acid, citric acid, valeric acid, enanthylic acid, elargonic acid, lauric acid, myristic acid, palmitic acid, margaric acid, stearic acid, etc.), organic acid salts (ammonium formate, calcium formate, potassium diformate, potassium formate, ammonium propionate, calcium propionate, sodium propionate, lignosulfonate salts, butyric acid, acetic, capric, caproic, caprylic, lignosulfonic, humic sodium, humic potassium, citric, valeric, enanthylic, elargonic, lauric, myristic, palmitic, margaric, stearic, etc. acid), inorganic acids (phosphoric acid, hydrochloric acid, sulphuric acid, nitric acid, etc.), anti-binders, surfactants, lignin derivatives, essential oils (including carvacrol, thymol, cinnamaldehyde, etc.) plant extracts and / or spices (rosemary, oregano, etc.).

These substances have a general preservative effect on microorganisms through different systems: by entering inside the microorganism, by weakening its wall, by creating a pH or an internal or external environment which is unsuitable for the microorganism, and so on. Therefore by applying these substances to the by-products generated by the aforementioned industries in the industry itself and as soon as possible after generation, it is possible to significantly reduce the degradation of the by-products.

During the technological processes in the meat, fish, fish farming or horticultural industries, slaughtering waste accumulates throughout the whole day in the non-refrigerated silo or tanks. Following the slaughter of animals, and the fish or vegetable processing, a large number of degradation processes start leading to a significant loss of quality of the by-products and therefore the poorer their quality, the poorer will be the quality of the resulting meat meals or fish meals, animal or vegetable oils or fats, or protein concentrates or vegetable derivatives.

By applying the various preservatives in the holding silos or hoppers to the by-products during the working day in the different industries mentioned, a reduction in pH and / or a preservation medium will be obtained allowing the preservation of by-products generated not only during the holding time, but also during subsequent transport to the processing factory. This application can be accomplished by injection systems that apply preservatives as they fall into the holding hopper or by simply making a solution in which the preservatives are diluted, and into which the by-products to be treated fall as in a bath (the solution partially or completely surrounds the by-products). This system does not involve prior or subsequent grinding, or any other similar physical treatment, yet rather the products or the solution are applied to the by-products directly.

As discussed previously a mixture of organic acids, inorganic acids, binders, lignin derivatives, essential oils, plant extracts and / or spices will be applied to the by-products from meat, fish, animal or vegetable oils or fats, by using a system involving the application in the holding hopper. This system periodically adds the products described above to the meat by-products and others cited above, which fall into the hopper. An attempt will be made to guide the application of product over the surface of by-products that accumulate in the holding hopper.

As by-products accumulate in the hopper, an exudation fluid is progressively generated which will be mixed with the added preservatives. In many cases the holding hoppers usually remove these fluids, among other reasons, to reduce the weight of the by-products to be transported and subsequently reduce the amount of energy used for water removal at the time of manufacturing meat meal, of fish meal, vegetable by-products and similar, and the production of oil or grease.

According to the invention, the exudation fluids should not be removed because a large amount of applied product would be lost as well. Therefore it would be deprived of its action during the greater part of the holding time. There are results that clearly show the difference between avoiding losses of exudation fluids and sending to the meat meal factory by-products in which most of the exudates have been removed, despite treatment with preservatives being identical in both cases.

US3475179 discloses a treatment of animal by-products in a hot aqueous solution of a hydroxy organic acid. WO 83/03522 teaches a process for treating fresh slaughtered meat by spraying with a liquid preserving composition.

## Claims

1. Procedure for the preservation of by-products from the meat industry and other food industries, which, with the purpose of drastically reducing the putrefaction or degradation of such by-products -without applying cold, in particular by adding appropriate preservatives to them- is **characterized in that** simultaneously with each loading of the products into the collecting silo or container, without grinding, milling or disintegrating such by-products, the preservative is pressure incorporated in an appropriate amount and jointly with pressurized air, in order to obtain a nebulisation of the preservative, with a uniform distribution of the same on each layer of the by-product.

2. Procedure for the preservation of by-products from the meat industry and other food industries, according to claim 1, **characterized in that** the different loads of by-product into the hopper are performed from a single location or from several, such that the by-products as a whole take within the hopper a cone-like configuration, the nebulised preservative being applied onto the surface of the by-products stored in the holding hopper, in order to contribute to a uniform distribution of the preservative on the by-product.

3. Procedure for the preservation of by-products from the meat industry and other food industries, according to preceding claims, **characterized in that** the loss of exudates is avoided by using airtight hoppers to prevent the loss of preservative being dragged with the exudates.

4. Procedure for the preservation of by-products from the meat industry and other food industries, according to preceding claims, **characterized in that** the loading of the by-products into the relevant storage container is carried out in an airtight manner based on overflow outlets located in correspondence with the upper half of the height of the holding hopper.

5. Procedure for the preservation of by-products from the meat industry and other food industries, according to preceding claims, **characterized in that** the dosing of the preservative is performed via a remote control system so that the ratio between by-products and preservatives remains within the pre-established limits.

6. Procedure for the preservation of by-products from the meat industry and other food industries, according to preceding claims, **characterized in that** during the loading of the by-products into the collecting silo or container, without grinding, milling or disintegration of such by-products, the appropriate amount the preservative is incorporated onto the surface of the by-product.

7. Procedure for the preservation of by-products from the meat industry and other food industries, according to claims 1 to 4 and 6, **characterized in that** the preservative dosing may be performed manually or even automatically.

## Patentansprüche

1. Verfahren zur Konservierung von Nebenprodukten aus der Fleischindustrie und sonstigen Lebensmittelindustrien, welches, mit dem Ziel, das Verfaulen bzw. den Zerfall solcher Nebenprodukte ohne Anwenden von Kälte drastisch zu verringern, insbesondere durch Hinzufügen geeigneter Konservierungsmittel zu diesen, **dadurch gekennzeichnet ist, dass** gleichzeitig mit jedem Laden der Produkte in das Sammelsilo bzw. den Sammelcontainer ohne Zermahlen, Zerkleinern oder Zersetzen solcher Nebenprodukte das Konservierungsmittel mit Druck in einer geeigneten Menge und zusammen mit Druckluft eingearbeitet wird, um eine Zerstäubung des Konservierungsmittels mit einer gleichmäßigen Verteilung desselbigen auf jeder Schicht des Nebenprodukts zu erhalten.

2. Verfahren zur Konservierung von Nebenprodukten aus der Fleischindustrie und sonstigen Lebensmittelindustrien nach Anspruch 1, **dadurch gekennzeichnet, dass** die verschiedenen Nebenproduktladungen in den Trichter von einem einzigen Ort oder von mehreren Orten derart durchgeführt werden, dass die Nebenprodukte als Ganzes innerhalb des Trichters eine kegelartige Ausbildung annehmen, wobei das zerstäubte Konservierungsmittel auf die Oberfläche der Nebenprodukte, die in dem Aufnahmetrichter gelagert sind, aufgebracht wird, um zu einer gleichmäßigen Verteilung des Konservierungsmittels auf dem Nebenprodukt beizutragen.

3. Verfahren zur Konservierung von Nebenprodukten aus der Fleischindustrie und sonstigen Lebensmittelindustrien nach den vorherigen Ansprüchen, **dadurch gekennzeichnet, dass** der Verlust von Exsudaten durch die Verwendung von luftdichten Trichtern vermieden wird, um den Verlust von Konservierungsmittel, das mit den Exsudaten abgezogen wird, zu verhindern.

4. Verfahren zur Konservierung von Nebenprodukten aus der Fleischindustrie und sonstigen Lebensmittelindustrien nach den vorherigen Ansprüchen, **dadurch gekennzeichnet, dass** das Laden der Nebenprodukte in den relevanten Speichercontainer auf eine luftdichte Art und Weise basierend auf Überlaufausgängen, die in Verbindung mit der oberen Hälfte der Höhe des Aufnahmetrichters liegen, durchgeführt wird.

5. Verfahren zur Konservierung von Nebenprodukten aus der Fleischindustrie und sonstigen Lebensmittelindustrien nach den vorherigen Ansprüchen, **dadurch gekennzeichnet, dass** die Dosierung des Konservierungsmittels über ein Fernsteuerungssystem derart durchgeführt wird, dass das Verhältnis zwischen Nebenprodukten und Konservierungsmitteln innerhalb der zuvor festgelegten Grenzen bleibt.

6. Verfahren zur Konservierung von Nebenprodukten aus der Fleischindustrie und sonstigen Lebensmittelindustrien nach den vorherigen Ansprüchen, **dadurch gekennzeichnet, dass** während des Ladens der Nebenprodukte in das Sammelsilo bzw. den Sammelcontainer ohne Zermahlen, Zerkleinern oder Zersetzen solcher Nebenprodukte die geeignete Menge des Konservierungsmittels auf die Oberfläche des Nebenprodukts eingearbeitet wird.

7. Verfahren zur Konservierung von Nebenprodukten aus der Fleischindustrie und sonstigen Lebensmittelindustrien nach den Ansprüchen 1 bis 4 und 6, **dadurch gekennzeichnet, dass** die Konservierungsmitteldosierung manuell oder sogar automatisch durchgeführt werden kann.

## Revendications

1. Procédé pour la conservation de sous-produits issus de l'industrie de la viande et d'autres industries alimentaires, qui, dans l'objectif de réduire drastiquement la putréfaction ou dégradation de tels sous-produits - sans appliquer du froid, en particulier en ajoutant des conservateurs appropriés à ces derniers - est **caractérisé en ce que** parallèlement à chaque chargement des produits dans le silo ou conteneur de collecte, sans écraser, moudre ou désintégrer de tels sous-produits, le conservateur est incorporé sous pression dans une quantité appropriée et avec de l'air pressurisé, afin d'obtenir une nébulisation du conservateur, avec une répartition uniforme de ce dernier sur chaque couche du sous-produit.

2. Procédé pour la conservation de sous-produits issus de l'industrie de la viande et d'autres industries alimentaires, selon la revendication 1, **caractérisé en ce que** les différents chargements de sous-produits dans la trémie sont mis en oeuvre depuis un seul emplacement ou plusieurs, de sorte que les sous-produits dans leur ensemble prennent dans la trémie une configuration similaire à un cône, le conservateur nébulisé étant appliqué sur la surface des sous-produits stockés dans la trémie de rétention, afin de contribuer à une répartition uniforme du conservateur sur le sous-produit.

3. Procédé pour la conservation de sous-produits issus de l'industrie de la viande et d'autres industries alimentaires, selon les revendications précédentes, **caractérisé en ce que** la perte d'exsudats est évitée en utilisant des trémies hermétiques pour prévenir la perte de conservateur entraîné avec les exsudats.

4. Procédé pour la conservation de sous-produits issus de l'industrie de la viande et d'autres industries alimentaires, selon les revendications précédentes, **caractérisé en ce que** le chargement des sous-produits dans le conteneur de stockage adéquat est mis en oeuvre hermétiquement consistant en des sorties de trop-plein situées en correspondance avec la moitié supérieure de la hauteur de la trémie de rétention.

5. Procédé pour la conservation de sous-produits issus de l'industrie de la viande et d'autres industries alimentaires, selon les revendications précédentes, **caractérisé en ce que** le dosage du conservateur est réalisé par le biais d'un système de commande à distance de sorte que le rapport entre les sous-produits et les conservateurs reste dans les limites préétablies.

6. Procédé pour la conservation de sous-produits issus de l'industrie de la viande et d'autres industries alimentaires, selon les revendications précédentes, **caractérisé en ce que** lors du chargement des sous-produits dans le silo ou conteneur de collecte, sans écraser, moudre ou désintégrer de tels sous-produits, la quantité appropriée le conservateur est incorporé sur la surface du sous-produit.

7. Procédé pour la conservation de sous-produits issus de l'industrie de la viande et d'autres industries alimentaires, selon les revendications 1 à 4 et 6, **caractérisé en ce que** le dosage de conservateur peut être réalisé manuellement voire automatiquement.
